# FASCICULE DE BREVET EUROPEEN

(11) **EP 1 575 880 B1**
(45) Date de publication et mention de la délivrance du brevet: **19.05.2010**
(21) Numéro de dépôt: 03767361.3
(22) Date de dépôt: 18.12.2003
(51) Int. Cl.: C05F 3/00, C05F 3/06, C05F 7/00, C02F 1/44, B01D 61/00, C02F 11/14, C02F 11/00, C02F 1/52

(54) **PROCEDE ET DISPOSITIF POUR LE TRAITEMENT DU LISIER BRUT**
VERFAHREN UND VORRICHTUNG ZUR BEHANDLUNG VON GÜLLE
METHOD AND DEVICE FOR TREATING RAW MANURE

(30) Priorité: 19.12.2002 US 434393 P
(43) Date de publication de la demande: 21.09.2005
(73) Titulaire: Carrière R. Poudrette Inc., Ste-Madeleine, Québec J0H 1SO (CA)
(72) Inventeur: POUDRETTE, Florian, Mont St-Hilaire (Québec) J3H 3H2 (CA); POUDRETTE, Alexandre, Ste-Madeleine, Québec J0H 1S0 (CA); GAUTHIER, Gaétan, décédé (CA)
(74) Mandataire: Bertrand, Didier
(86) Numéro de dépôt international: PCT/CA2003/001971
(87) Numéro de publication internationale: WO 2004/056722

(56) Documents cités:
- DE-A- 10 153 806
- DE-A- 10 154 165
- US-A- 4 342 650
- US-A- 5 885 461
- US-B1- 6 409 788

## Description

### DOMAINE TECHNIQUE

La présente invention se rapporte à un procédé et à un dispositif pour traiter du lisier brut permettant la production d'engrais solide, d'engrais liquide et d'eau répondant éventuellement aux normes environnementales et pouvant être retournée de façon sécuritaire dans l'environnement ou être simplement recyclée Particulièrement, le procédé et le dispositif sont adaptés pour permettre la séparation et le traitement séparé des composantes liquide et solide du lisier de porc, en utilisant de la poussière de pierres naturelles et/ou des dérivés industriels, comme agent de sédimentation des particules colloïdales du lisier. Outre la valorisation du lisier, ce procédé et ce dispositif permettent la valorisation de résidus de carrière.

### TECHNIQUE ANTÉRIEURE

La création de méga-porcheries soulève des problèmes croissants quant à la gestion du lisier de porc. Conventionnellement, les éleveurs de porc éliminent le lisier de porc par l'épandage de celui-ci sur des terres agricoles. Bien que cette solution soit économique, elle soulève des problèmes grandissants, notamment la contamination de l'air causée par les mauvaises odeurs, la contamination de l'eau souterraine et des sources, de même que la contamination des sols résultant de la grande quantité de déchets. Pour contrecarrer ces problèmes, les agriculteurs ont de plus en plus recours au transport du lisier par camions afin de disposer de terres d'épandage éloignées. Cette situation entraîne toutefois des inconvénients, tel que l'augmentation des coûts reliés à l'épandage et les difficultés de transport d'un matériel liquide.

Plutôt que de s'attarder au mode de disposition du lisier, certains chercheurs se sont penchés sur les modes de traitement du lisier. Parmi ceux-ci, on retrouve la biofiltration à l'aide de matériel biologique tel que la mousse de tourbe ou la paille. Cette méthode présente les avantages de ne pas causer de pollution secondaire, permet une réduction des odeurs de 60 % à 80 % et est une technologie peu dispendieuse et facile à installer, pouvant être utilisée dans des espaces restreints. Toutefois, les biofiltres doivent être remplacés périodiquement et ne permettent aucune valorisation de la matière organique. Une autre stratégie visant à ajouter des additifs au lisier permet une réduction d'odeurs de 70 % à 85 %, une réduction de la matière solide et une réduction de l'ammoniac. Les additifs utilisés peuvent être des agents masquants, des agents chimiques permettant d'absorber les odeurs ou encore des agents biologiques. En plus d'être dispendieux, les résultats obtenus en utilisant cette stratégie sont à ce jour mitigés.

L'ajout d'additifs à la nourriture des porcs constitue une alternative pour réduire les odeurs et les quantités d'ammoniac dans le lisier de porc. En effet, des agents tels les acides aminés, des zéolites, du charbon, des extraits de plantes, des enzymes, des microbes ou des sels peuvent être ajoutés à la nourriture afin d'améliorer la conversion de la nourriture et les performances de croissance des porcs. Cette technologie est toutefois elle aussi dispendieuse et l'efficacité de cette méthode ne fait pas l'unanimité dans les marchés commerciaux. D'autres éleveurs choisissent simplement de recouvrir leur fosse à purin à l'aide de couvercles de différentes natures, prévenant ainsi l'émission de mauvaises odeurs; alors que d'autres choisissent d'aménager des barrières biologiques d'arbres autour de leurs installations, prévenant ainsi le déplacement des mauvaises odeurs.

L'art antérieur décrit aussi des procédés visant à séparer les composantes solides et liquides contenus dans le lisier de porc. Le brevet américain publié au numéro US4,193,206 décrit un procédé de séchage du purin et de filtration d'eau. Ce procédé requiert le séchage thermique ou la déshydratation mécanique dans une chambre cylindrique munie de parois poreuses. Le brevet américain publié au numéro US4,270,279 décrit une méthode pour sécher et stériliser les boues contaminées en séchant ces dernières et en les fragmentant en petits morceaux. Le brevet américain publié au numéro US4,295,972 décrit quant à lui une méthode pour traiter de l'eau contenant des polluants. Cette méthode comprend entre autres une étape dans laquelle de l'oxyde de calcium est ajouté à l'eau contaminée pour séchage préliminaire et le composé obtenu est transformé sous forme de granules. Le brevet américain publié au numéro US5,013,458 décrit un procédé et un appareil permettant la réduction de pathogènes et de déchets. Cette méthode inclus une étape d'hydratation réalisée en élevant le pH des boues usées permettant le relargage de la chaleur. Le brevet américain publié au numéro

US 5,885,461 décrit un procédé et un système visant à traiter les purins d'animaux domestiques tel que les porcs, comprenant les étapes de compression du lisier pour séparer les liquides des solides et le séchage des boues contaminées. L'addition de carbonate de calcium permet de réduire les mauvaises odeurs et l'ajout de polymères à l'étape de compression des boues favorise la séparation du liquide contenu dans les boues. Le liquide obtenu est ensuite traité à l'aide d'une membrane filtrante permettant de retirer les éléments indésirables du liquide. Le liquide filtré est éventuellement retourné à l'environnement.

Bien que ce dernier procédé présente des caractéristiques intéressantes, la séparation des composantes solides et liquides du lisier nécessite une étape mécanique supplémentaire, générant des coûts énergétiques additionnels. De plus, aucune méthode ne prévoit l'ajout d'un agent de précipitation permettant la séparation des composantes solides et liquides du lisier permettant le traitement séparé de ces deux phases.

Le brevet américain US 6,409,788 préconise l'utilisation d'un agent de floculation et de produits chimiques favorisant la précipitation des phosphates, associés à une base et un agent de rétention de l'ammoniac. Il s'agit évidemment d'un procédé dispendieux et qui se limite à la séparation des phosphates et la formation d'une phase liquide très impure.

Il serait donc intéressant de disposer d'un procédé permettant le traitement de lisier brut et permettant la valorisation de résidus de carrière, utilisables comme agent de précipitation de particules solides.

### EXPOSÉ DE L'INVENTION

L'invention a pour objet un procédé de traitement du lisier brut permettant la production d'engrais solide, d'engrais liquide et d'eau recyclable. Le procédé comprend les étapes indiquées dans la revendication 1 annexée.

Le lisier brut contient habituellement entre 1 et 10%, de préférence 4% en poids de matière solide sur base sèche par rapport au poids du lisier brut.

L'agent floculant normalement utilisé est un floculant cationique, notamment un polyacrylamide de préférence cationique, par exemple choisi dans le groupe comprenant NALC07191, NALC07193, NALC07194, NALC07196, CYTEC2085, et CHEMAX2746.

L'agent floculant peut être utilisé sous toute forme acceptable de l'homme de l'art, mais de préférence il est sous forme d'une émulsion comprenant entre 0,1 et 0,5%, de préférence 0,35% en poids d'agent floculant. On ajoute normalement entre 5 à 30%, plus particulièrement 10% en poids d'émulsion par rapport au poids de lisier à traiter.

Préalablement à l'ajout de l'agent de sédimentation, il est recommandé d'ajouter de l'eau au lisier additionné d'un agent floculant, par exemple entre 50 à 400%, de préférence entre 100 et 120% en poids par rapport au poids du lisier à traiter. Une partie de l'eau ajoutée au lisier à traiter est habituellement constituée par le filtrat obtenu au cours du traitement.

Selon une particularité préférentielle de l'invention, l'on fait passer le produit obtenu après l'addition de l'agent de floculation, dans au moins un, de préférence trois, mélangeurs stationnaires avant d'y ajouter l'agent de sédimentation, et l'on transfère ensuite le mélange obtenu dans un réservoir où sera ajouté l'agent de sédimentation.

L'agent de sédimentation comprend par exemple une poussière de pierres naturelles choisi dans le groupe constitué par les roches de cornéenne, de syénite, de schiste, de calcaire, et/ou de dolomie. D'excellents résultats furent obtenues en utilisant de la poussière de roche cornéenne.

La quantité d'agent de sédimentation peut varier selon le choix de l'homme de l'art, mais il est préférable d'en ajouter entre 0,5 et 15%, par exemple 10% en poids par rapport au poids du lisier.

La filtration utilisé pour séparer le filtrat du concentrât est de préférence une filtration membranaire. Par exemple, on choisi un type de filtration qui s'étend de la micro-, l'ultra- et la nanofiltration jusqu'à l'osmose inverse. Pour de meilleurs résultats, la filtration membranaire est suivie d'une filtration sur charbon activée.

Selon une autre réalisation, lors du bouletage on ajoute une certaine quantité de l'agent de sédimentation préalablement à l'obtention des boulettes.

Bien que tout agent liant puisse être utilisé, celui que l'on préfère selon la présente invention est un lignosulfonate. On pourrait aussi utiliser de la bentonite ou du silicate de sodium.

L'invention a aussi pour objet un dispositif de traitement de lisier destiné à produire un engrais solide, un engrais liquide et de l'eau recyclable. Ce dispositif présente les caractéristiques énoncées dans la revendication 12 annexée.

### BRÈVE DESCRIPTION DES DESSINS

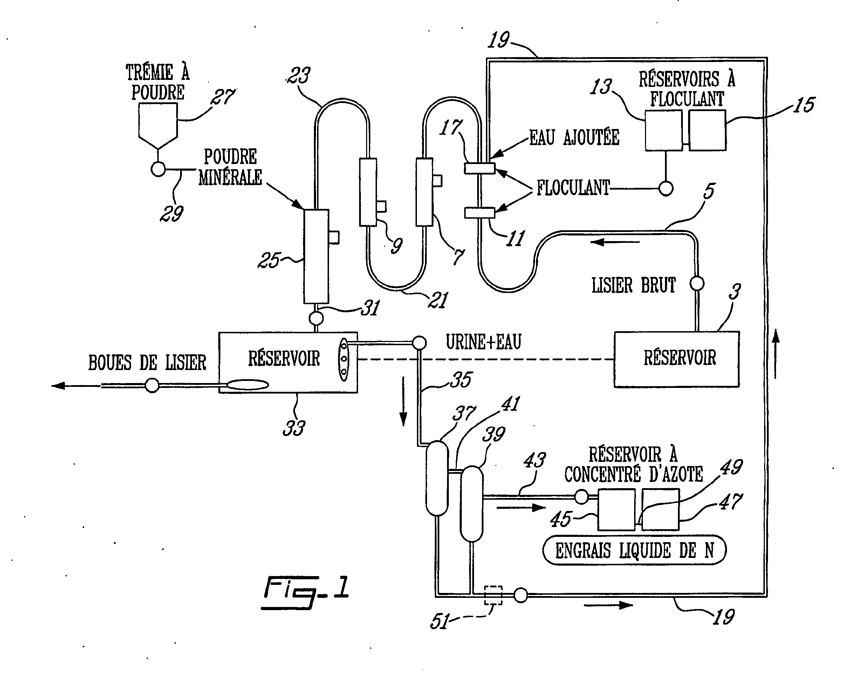

FIG. 1 est un schéma illustrant un dispositif de traitement de lisier pouvant être utilisé pour la réalisation du traitement selon la présente invention.

### MANIÈRE DE RÉALISER L'INVENTION

En se référant au dessin donné à titre purement illustratif et qui décrit un schéma préférentiel de la réalisation du traitement selon l'invention, on verra que le lisier brut (ou tout fumier liquide il va sans dire) est recueilli comme il va de soi dans un réservoir à lisier brut 3 en béton et est acheminé par un conduit 5 vers trois mélangeurs stationnaires 7, 9 et 25. Dans cette réalisation, le mélangeur 7 est un mélangeur Westfall et les mélangeurs 9 et 25 sont des mélangeurs distribués par Cold Parmer. L'homme de mélangeur ou mélangeurs selon les besoins. Le long du conduit 5 et préalablement à l'introduction du lisier brut dans les trois mélangeurs stationnaires 7, 9 et 25, on a prévu une entrée d'agent de floculation dans un mélangeur stationnaire Westfall 11, dans le présent cas du NALC07191 bien que tout autre agent, de préférence un polyacrylamide cationique, puisse aussi être utilisé. Le NALC07191 est emmagasiné dans des réservoirs à floculant 13 et 15 en communication entre eux comme on le voit bien sur le schéma.

Dans cette réalisation, le floculant est présent dans les réservoirs 13 et 15 sous forme d'émulsion comprenant 0,35% en poids de NALC07191. Il va de soi que toute autre concentration convenable pourrait aussi être utilisée, par exemple entre 0,1% et 0,5%. On Ajoute normalement 5 à 30% en poids d'émulsion par rapport au poids du lisier à traiter. De plus, toujours le long du conduit 5, on a prévu une entrée d'eau dans un mélangeur stationnaire Westfall 17 reliée d'une part à une source quelconque d'eau fraîche et d'autre part à l'eau obtenue sous forme de filtrat obtenu au cours du traitement et dont il sera fait mention plus en détail plus loin, laquelle eau est recyclée par la conduite 19 comme on le voit bien sur le schéma. Le dispositif est ajusté de façon connue pour introduire dans le lisier brut additionnée de floculant, entre 50 et 400%, de préférence entre 100 et 120% en poids d'eau provenant à la fois de la source mentionnée ci-dessus et du filtrat recyclé.

Toujours en se référant au dessin, on se rendra compte que le mélange de lisier, de floculant et d'eau préalablement mélangé dans le mélangeur stationnaire 7 est acheminé vers le deuxième mélangeur stationnaire 9 par le conduit 21. On verra de plus qu'en dernier recours, ce dernier mélange est acheminé par un conduit 23 vers un autre mélangeur stationnaire Cole Palmer 25, où le mélange sera additionné de poussière de roche cornéenne. Évidemment toute autre poussière de déchets industriels donnant les mêmes résultats pourra aussi être utilisé, comme cela sera évident pour l'homme de l'art. Cette poussière de roche cornéenne est entreposée dans une trémie à poudre 27 laquelle est reliée au mélangeur 25 par un conduit 29. On aura prévu un moyen connu de l'homme de l'art pour régler l'addition de poussière de roche cornéenne entre 0,5 à 15% en poids, de préférence 10% en poids par rapport au poids du lisier à traiter. Au contact de l'agent de sédimentation sous forme de poussière de roche cornéenne, il y aura épaississage du mélange lequel est acheminé dans le réservoir en béton 33 par le conduit 31 et formation d'une phase solide et d'une phase liquide.

À partir du réservoir 33, la composante liquide du lisier est séparée par décantation (non illustrée sur ce schéma) et menée par un conduit 35 vers un système de filtration dont nous allons donner les détails un peu plus loin. La phase solide sous forme de boue de lisier est ensuite séchée de façon connue pour qu'elle ne contienne que de 10 à 60% d'eau. On peut ensuite ajouter toute autre matière d'intérêt notamment des engrais et une certaine quantité de poussière de roche cornéenne, et l'on agglomère le tout par agitation à froid avec un agent liant, notamment un lignosulfonate pour obtenir des boulettes constituant un engrais chimique. Ces boulettes, qui ont de préférence un diamètre variant entre 50µ et 5 mm, peuvent ensuite être ensachées et utilisées comme engrais à teneur élevée en sodium, en potassium et en oligo-élements. Ces dernières étapes sont tout à fait conventionnelles et n'ont pas été illustrées sur le schéma, mais il va de soi que l'homme de l'art saura les adapter à ses propres besoins.

Comme on l'a mentionné plus haut, la composante liquide du lisier séparée par décantation est acheminée vers un système de filtration. Ce dernier est constitué d'une unité d'ultrafiltration 37 et d'un filtre à osmose inversée 39, ces derniers étant en communication entre eux par un conduit 41. Dans ce système, il y séparation entre un concentrat renfermant en pratique les composés azotés du lisier, lequel est acheminé par un conduit 43 vers des réservoirs à concentré d'azote 45 et 47 en communication entre eux par un conduit 49.

Le filtrat rejeté par le système de filtration est acheminé de façon connue vers un filtre à charbon activé 51 dont on pourrait se dispenser comme il va de soi. Le filtrat est ensuite recyclé par le conduit 19, en 17 pour y être mélanger au lisier additionné de floculant.

## Revendications

1. Procédé de traitement du lisier brut permettant la production d'engrais solide, d'engrais liquide et d'eau recyclable, comprenant les étapes suivantes:
on sépare une phase liquide et une phase solide (33);
on filtre la phase liquide de manière à produire d'une part un concentrat contenant substantiellement les composés azotés du lisier et d'autre part un filtrat constituant l'eau recyclable;
on récolte le concentrat de composés azotés constituant l'engrais liquide;
on déshydrate la phase solide du lisier dans des conditions permettant de minimiser le contenu en eau entre 10 et 60% en poids; et
on agglomère la phase solide déshydratée afin d'obtenir des boulettes constituant l'engrais solide ;
**caractérisé en ce que**, avant la séparation de la phase solide et de la phase liquide, on ajoute à une quantité de lisier brut, un agent floculant capable de former des flocons contenant les composantes solides du lisier et on mélange l'ensemble lisier brut et agent floculant (11, 17) ; on ajoute ensuite au produit obtenu en combinant le lisier brut et l'agent floculant, un agent de sédimentation à base de poussières de pierres naturelles et/ou de dérivés industriels favorisant l'épaississage du mélange et la production d'une phase solide et d'une phase liquide (25) ; on recycle le filtrat pour être ajouté au lisier brut et à l'agent floculant (19) ; et la séparation de la phase solide et de la phase liquide est réalisée par décantation (33) et l'agglomération de la phase solide déshydratée est réalisée par agitation à froid avec ajout d'un agent liant.

2. Procédé selon la revendication 1, **caractérisé en ce que** le lisier brut contient entre 1 et 10% en poids de matière solide sur base sèche par rapport au poids du lisier brut.

3. Procédé selon la revendication 2, **caractérisé en ce que** l'agent floculant est un floculant cationique.

4. Procédé selon la revendication 1, **caractérisé en ce que** l'agent floculant est sous forme d'une émulsion comprenant entre 0,1 et 0,5% en poids d'agent floculant

5. Procédé selon la revendication 1, **caractérisé en ce que** préalablement à l'ajout de l'agent de sédimentation, on ajoute de l'eau au lisier additionné d'un agent floculant.

6. Procédé selon la revendication 5, **caractérisé en ce que** l'on ajoute entre 50 et 400% en poids d'eau par rapport au poids du lisier à traiter.

7. Procédé selon la revendication 5, **caractérisé en ce qu'**une partie de l'eau ajoutée au lisier à traiter est constituée par le filtrat que l'on recycle (19).

8. Procédé selon la revendication 1, **caractérisé en ce que** l'agent de sédimentation comprend une poussière de pierres naturelles choisie dans le groupe constitué les roches de cornéenne, de syénite, de schiste, de calcaire et/ou de dolomie.

9. Procédé selon la revendication 1, **caractérisé en ce que** l'on ajoute entre 0,5 et 15% en poids d'agent de sédimentation par rapport au poids du lisier.

10. Procédé selon la revendication 1, **caractérisé en ce que** la phase liquide est filtrée par filtration membranaire (37).

11. Procédé selon la revendication 10, **caractérisé en ce que** la filtration membranaire est suivie d'une filtration sur charbon activé (39).

12. Procédé selon la revendication 1, comprenant l'ajout d'un agent de sédimentation préalablement à l'agrégation des boulettes.

13. Dispositif de traitement de lisier destiné à produire un engrais solide, un engrais liquide et de l'eau recyclable, comprenant:
un réservoir à lisier (3);
une source d'agent floculant (13, 15), et un moyen permettant &introduire ledit agent floculant dans le lisier, dans des conditions favorisant le rassemblement des composantes solides du lisier;
un moyen permettant de séparer une phase solide et une phase liquide (38);
un moyen de filtration membranaire (37) pour traiter la phase liquide et donner d'une part un concentrat renfermant des composés azotés, et d'autre part un filtrat;
un moyen pour déshydrater la phase solide jusqu'à un contenu en eau variant entre 10 et 60% en poids par rapport au poids du lisier à traiter; et
un moyen d'agglomération permettant l'obtention de boulettes constituant un engrais solide,
**caractérisé en ce que** le dispositif comprend également un moyen de mélange pour mélanger l'ensemble lisier et agent floculant (11, 17), une source d'agent de sédimentation des composantes solides du lisier (27) et un moyen pour ajouter ledit agent au milieu renfermant les dites composantes solides, et former une phase solide et une phase liquide, et un moyen permettant de recycler le filtrat au lisier additionné d'un agent floculant (19);
le moyen permettant de séparer la phase solide de la phase liquide (33) employant la décantation et le moyen d'agglomération comprenant un moyen d'agitation à froid avec ajout d'un agent liant.

## Claims

1. Process for treating raw semi-liquid manure that makes it possible produce a solid fertilizer, a liquid fertilizer and recyclable water, comprising the following steps:
a liquid phase and a solid phase (33) are separated;
the liquid phase is filtered so as to produce, on the one hand, a concentrate containing substantially the nitrogen-containing compounds of the semi-liquid manure and, on the other hand, a filtrate constituting the recyclable water;
the concentrate of nitrogen-containing compounds constituting the liquid fertilizer is collected;
the solid phase of the semi-liquid manure is dehydrated under conditions that make it possible to minimize the water content between 10 and 60% by weight; and
the dehydrated solid phase is agglomerated in order to obtain pellets constituting the solid fertilizer,
**characterized in that**, before the separation of the solid phase and the liquid phase, a flocculating agent capable of forming flocs containing the solid components of the semi-liquid manure is added to a quantity of raw semi-liquid manure, and the raw semi-liquid manure and flocculating agent (11, 17) assembly is mixed; next, added to the product obtained by combining the raw semi-liquid manure and the flocculating agent is a sedimentation agent based on dust from natural stones and/or industrial derivatives that promotes the thickening of the mixture and the production of a solid phase and of a liquid phase (25); the filtrate is recycled in order to be added to the raw semi-liquid manure and to the flocculating agent (19); and the separation of the solid phase and the liquid phase is carried out by decantation (33) and the agglomeration of the dehydrated solid phase is carried out by stirring at low temperature with addition of a binder.

2. Process according to Claim 1, **characterized in that** the raw semi-liquid manure contains between 1 and 10% by weight of solids on a dry basis relative to the weight of the raw semi-liquid manure.

3. Process according to Claim 2, **characterized in that** the flocculating agent is a cationic flocculant.

4. Process according to Claim 1, **characterized in that** the flocculating agent is in the form of an emulsion comprising between 0.1 and 0.5% by weight of flocculating agent.

5. Process according to Claim 1, **characterized in that**, prior to the addition of the sedimentation agent, water is added to the semi-liquid manure to which a flocculating agent has been added.

6. Process according to Claim 5, **characterized in that** between 50 and 400% by weight of water is added relative to the weight of the semi-liquid manure to be treated.

7. Process according to Claim 5, **characterized in that** a portion of the water added to the semi-liquid manure to be treated is constituted by the filtrate that is recycled (19).

8. Process according to Claim 1, **characterized in that** the sedimentation agent comprises a dust of natural stones chosen from the group constituted by hornfels, syenite, shale, limestone and/or dolomite rocks.

9. Process according to Claim 1, **characterized in that** between 0.5 and 15% by weight of sedimentation agent is added relative to the weight of the semi-liquid manure.

10. Process according to Claim 1, **characterized in that** the liquid phase is filtered by membrane filtration (37).

11. Process according to Claim 10, **characterized in that** the membrane filtration is followed by a filtration over activated carbon (39).

12. Process according to Claim 1, comprising the addition of a sedimentation agent prior to the aggregation of the pellets.

13. Device for treating semi-liquid manure intended for producing a solid fertilizer, a liquid fertilizer and recyclable water, comprising:
a semi-liquid manure tank (3);
a source of flocculating agent (13, 15), and a means that enables said flocculating agent to be introduced into the semi-liquid manure, under conditions that promote the assembling of the solid components of the semi-liquid manure;
a means that enables a solid phase and a liquid phase (38) to be separated;
a membrane filtration means (37) for treating the liquid phase and giving, on the one hand, a concentrate containing nitrogen-containing compounds and, on the other hand, a filtrate;
a means for dehydrating the solid phase to a water content that varies between 10 and 60% by weight relative to the weight of the semi-liquid manure to be treated; and
an agglomeration means that makes it possible to obtain pellets constituting a solid fertilizer,
**characterized in that** the device also comprises a mixing means for mixing the semi-liquid manure and flocculating agent (11, 17) assembly, a source of sedimentation agent (27) for sedimentation of the solid components of the semi-liquid manure and a means for adding said agent to the medium containing said solid components, and forming a solid phase and a liquid phase, and a means (19) that enables the filtrate to be recycled to the semi-liquid manure to which a flocculating agent has been added;
the means (33) that enable the solid phase and the liquid phase to be separated employing decantation and the agglomeration means comprising a means of stirring at low temperature with addition of a binder.

## Patentansprüche

1. Verfahren zur Behandlung von Rohgülle, das die Erzeugung von festem Dünger, von flüssigem Dünger und von recyclebarem Wasser ermöglicht, das die folgenden Schritte enthält:
Trennen einer flüssigen Phase und einer festen Phase (33);
Filtern der flüssigen Phase, um einerseits ein Konzentrat, das im Wesentlichen die stickstoffhaltigen Verbindungen der Gülle enthält, und andererseits ein Filtrat zu erzeugen, das das recyclebare Wasser bildet; Sammeln des den flüssigen Dünger bildenden Konzentrats von stickstoffhaltigen Verbindungen;
Entwässern der festen Phase der Gülle unter Bedingungen, die es ermöglichen, den Wassergehalt zwischen 10 und 60 Gew.-% zu minimieren; und
Agglomerieren der entwässerten festen Phase, um den festen Dünger bildende Kügelchen zu erhalten;
**dadurch gekennzeichnet, dass** vor der Trennung der festen Phase und der flüssigen Phase einer Menge Rohgülle ein Flockungsmittel hinzugefügt wird, das Flocken formen kann, die die festen Bestandteile der Gülle enthalten, und die Einheit aus Rohgülle und Flockungsmittel gemischt wird (11, 17); dann dem durch Kombination der Rohgülle und des Flockungsmittels erhaltenen Produkt ein Sedimentationsmittel auf der Basis von natürlichem Steinstaub und/oder industriellen Derivaten hinzugefügt wird, das die Eindickung der Mischung und die Erzeugung einer festen Phase und einer flüssigen Phase begünstigt (25); das Filtrat recycelt wird, um zur Rohgülle und zum Flockungsmittel hinzugefügt zu werden (19); und die Trennung der festen Phase und der flüssigen Phase durch Dekantieren durchgeführt wird (33), und das Agglomerieren der entwässerten festen Phase durch Kaltrühren unter Hinzufügung eines Bindemittels durchgeführt wird.

2. Verfahren nach Anspruch 1, **dadurch gekennzeichnet, dass** die Rohgülle zwischen 1 und 10 Gew.-% Feststoff auf Trockenbasis im Verhältnis zum Gewicht der Rohgülle enthält.

3. Verfahren nach Anspruch 2, **dadurch gekennzeichnet, dass** das Flockungsmittel ein kationisches Flockungsmittel ist.

4. Verfahren nach Anspruch 1, **dadurch gekennzeichnet, dass** das Flockungsmittel in Form einer Emulsion vorliegt, die zwischen 0,1 und 0,5 Gew.-% Flockungsmittel enthält.

5. Verfahren nach Anspruch 1, **dadurch gekennzeichnet, dass** vor dem Hinzufügen des Sedimentationsmittels Wasser zur mit einem Flockungsmittel angereicherten Gülle hinzugefügt wird.

6. Verfahren nach Anspruch 5, **dadurch gekennzeichnet, dass** zwischen 50 und 400 Gew.-% Wasser im Verhältnis zur zu behandelnden Gülle hinzugefügt wird.

7. Verfahren nach Anspruch 5, **dadurch gekennzeichnet, dass** ein Teil des zur zu behandelnden Gülle hinzugefügten Wassers aus dem Filtrat besteht, das recycelt wird (19).

8. Verfahren nach Anspruch 1, **dadurch gekennzeichnet, dass** das Sedimentationsmittel einen Staub aus Natursteinen enthält, der aus der Gruppe ausgewählt wird, die aus den Hornfels-, Syenit-, Schiefer-, Kalk- und/oder Dolimitsteinen besteht.

9. Verfahren nach Anspruch 1, **dadurch gekennzeichnet, dass** zwischen 0,5 und 15 Gew.-% Sedimentationsmittel im Verhältnis zum Gewicht der Gülle hinzugefügt wird.

10. Verfahren nach Anspruch 1, **dadurch gekennzeichnet, dass** die flüssige Phase durch Membranfilterung gefiltert wird (37).

11. Verfahren nach Anspruch 10, **dadurch gekennzeichnet, dass** auf die Membranfilterung eine Filterung auf Aktivkohle folgt (39).

12. Verfahren nach Anspruch 1, das die Hinzufügung eines Sedimentationsmittels vor der Aggregation der Kügelchen enthält.

13. Vorrichtung zur Behandlung von Gülle, die dazu bestimmt ist, einen festen Dünger, einen flüssigen Dünger und recyclebares Wasser zu erzeugen, die enthält:
einen Gülletank (3);
eine Flockungsmittelquelle (13, 15) und eine Einrichtung, die es ermöglicht, das Flockungsmittel unter Bedingungen in die Gülle einzuführen, die das Sammeln der Festkörper der Gülle begünstigen;
eine Einrichtung, die es ermöglicht, eine feste Phase und eine flüssige Phase zu trennen (38);
eine Membranfiltereinrichtung (37), um die flüssige Phase zu behandeln und einerseits ein stickstoffhaltige Verbindungen enthaltendes Konzentrat und andererseits ein Filtrat zu ergeben;
eine Einrichtung, um die feste Phase bis zu einem Wassergehalt zu entwässern, der zwischen 10 und 60 Gew.-% im Verhältnis zum Gewicht der zu behandelnden Gülle variiert; und
eine Agglomerierungseinrichtung, die den Erhalt von einen festen Dünger bildenden Kügelchen ermöglicht,
**dadurch gekennzeichnet, dass** die Vorrichtung ebenfalls eine Mischeinrichtung zum Mischen der Einheit aus Gülle und Flockungsmittel (11, 17), eine Quelle eines Sedimentationsmittels der Festkörper der Gülle (27) und eine Einrichtung, um das Mittel zum die Festkörper enthaltende Medium hinzuzufügen und eine feste Phase und eine flüssige Phase zu formen, und eine Einrichtung enthält, die es ermöglicht, das Filtrat zur mit einem Flockungsmittel angereicherten Gülle zu recyceln (19);
wobei die die Trennung der festen Phase und der flüssigen Phase ermöglichende Einrichtung (33) die Dekantierung verwendet und die Agglomerierungseinrichtung eine Einrichtung zum Kaltrühren mit Hinzufügung eines Bindemittels enthält.
